# EUROPÄISCHE PATENTSCHRIFT

(11) **EP 4 251 531 B1**
(45) Veröffentlichungstag und Bekanntmachung des Hinweises auf die Patenterteilung: **26.02.2025**
(21) Anmeldenummer: 21806219.8
(22) Anmeldetag: 04.11.2021
(51) Int. Cl.: B65D 51/16, F16B 35/04, F16B 39/284, B65D 39/08

(54) **SPUNDSTOPFENVERSCHLUSS**
BUNG PLUG CLOSURE
FERMETURE À BOUCHON DE BONDE

(30) Priorität: 30.11.2020 DE 102020131713
(43) Veröffentlichungstag der Anmeldung: 04.10.2023
(73) Patentinhaber: Protechna S.A., 1701 Fribourg (CH)
(72) Erfinder: PREE, Karl-Heinz, 57539 Etzbach (DE); KLATT, Bernd, 56412 Ruppach-Goldhausen (DE)
(74) Vertreter: advotec.
(86) Internationale Anmeldenummer: PCT/EP2021/080648
(87) Internationale Veröffentlichungsnummer: WO 2022/111970

(56) Entgegenhaltungen:
- CN-A- 109 654 107
- DE-B3- 102018 103 137
- FR-A- 419 319

## Beschreibung

Die Erfindung betrifft einen Spundstopfenverschluss für Spundbehälter mit einem Spundstopfen zur Anordnung in einem Spundstutzen des Spundbehälters nach dem Oberbegriff des Anspruchs 1. Spundstopfenverschlüsse der eingangs genannten Art kommen sowohl an Spundbehältern zum Einsatz, die als Fass ausgebildet sind, als auch an Spundbehältern, die als Innenbehälter eines Intermediate Bulk Containers (IBC) ausgebildet sind. Je nach Beschaffenheit der in dem Spundbehälter aufgenommenen Flüssigkeit weisen die Spundstopfen einen geschlossenen Muldenboden oder einen Muldenboden auf, der eine Gasaustauscheinrichtung aufweist, die eine Be- und Entlüftung eines Behälterinnenraums ermöglicht, um gegebenenfalls einen Druckausgleich mit der Behälterumgebung ausführen zu können.

Unabhängig von der jeweiligen Ausgestaltung des Muldenbodens der Spundstutzen werden die Spundstopfen zur Entleerung des Spundbehälters aus einer regelmäßig an einer Behälteroberseite ausgebildeten Einfüllöffnung entfernt, um für die Entnahme der im Behälter aufgenommenen Flüssigkeit mittels einer regelmäßig an einer Behälterseite ausgebildeten Entnahmeeinrichtung eine ausreichende Belüftung des Behälterinnenraums zu ermöglichen.

In der Praxis wird hierzu der über eine Verschraubung mit dem Spundstutzen verbundene Spundstopfen unter Verwendung eines in die Stopfenmulde des Spundstopfens eingeführten Montagewerkzeugs aus dem Spundstutzen herausgedreht, sodass der gesamte Öffnungsquerschnitt des Spundstutzens für die Belüftung des Behälterinnenraums zur Verfügung steht.

Abgesehen davon, dass zur Durchführung der bekannten Belüftungsmaßnahme der Einsatz des entsprechend bereitzuhaltenden Montagewerkzeugs notwendig ist, ist insbesondere bei einer mehrfachen Entnahme von Teilmengen der im Spundbehälter aufgenommenen Flüssigkeit eine Abnutzung an den miteinander im Eingriff stehenden Gewinden des Spundstutzens und des Spundstopfens sowie an der zwischen dem Spundstutzen und dem Spundstopfen eingesetzten Dichtung festzustellen. Darüber hinaus besteht aufgrund des großen Öffnungsquerschnitts des Spundstutzens das Risiko, dass Fremdkörper in den Behälterinnenraum gelangen können. Weiterhin macht es die vollständige Entfernung des Spundstopfens aus dem Spundstutzen notwendig, dass der Spundstopfen für die Zeitdauer der Entnahme der Flüssigkeit aus dem Spundbehälter in geeigneter Weise verwahrt wird, um den Spundstopfen nach der Flüssigkeitsentnahme wieder in den Spundstutzen eindrehen zu können.

Aus den vorstehenden Ausführungen wird deutlich, dass die bislang ausgeübte Praxis zur Belüftung eines Spundbehälters während der Flüssigkeitsentnahme mit einem nicht unerheblichen Aufwand verbunden ist, und die Durchführung der Behälterbelüftung eine entsprechende Sorgfalt erfordert.

Aus der FR 419 319 A1 ein Spundstopfenverschluss für ein Fass bekannt, bei dem ein Spundstopfen in einer Stopfenmulde mit einem Belüftungsstopfen versehen ist, der in eine in einem Muldenboden ausgebildete Aufnahmebohrung eingesetzt ist, wobei die Aufnahmebohrung des Belüftungsstopfens gleichzeitig als Belüftungsöffnung dient.

Aus der CN 109 654 107 A ist ein selbstsichernder Bolzen zur Aufnahme in einer Aufnahmebohrung bekannt.

Die DE 10 2018 103 137 B3 zeigt einen Spundstopfenverschluss mit einem Spundstopfen, der in einem Muldenboden mit einem in einer Belüftungsöffnung angeordneten Ventilkörper versehen ist.

Der vorliegenden Erfindung liegt daher die Aufgabe zugrunde, einen Spundstopfenverschluss bereitzustellen, der die Durchführung der für die Entnahme der Flüssigkeit aus dem Spundbehälter erforderlichen Belüftung des Behälters wesentlich vereinfacht.

Zur Lösung dieser Aufgabe weist der erfindungsgemäße Spundstopfenverschluss die Merkmale des Anspruchs 1 auf.

Bei dem erfindungsgemäßen Stopfenverschluss weist die Stopfenmulde einen mit zumindest einer Belüftungsöffnung versehenen Muldenboden auf, und der Spundstopfen ist mit einem in der Stopfenmulde angeordneten Belüftungsstopfen versehen, der mit einem Gewindebolzen in einem Innengewinde einer im Muldenboden ausgebildeten Aufnahmebohrung aufgenommen ist und eine mit einer Handhabungseinrichtung versehene und mit dem Gewindebolzen verbundene Deckelscheibe zur Abdichtung der Belüftungsöffnung in einer Schließstellung des Belüftungsstopfens aufweist. Die Belüftungsöffnung ist zusätzlich zu der Aufnahmebohrung im Muldenboden ausgebildet.

Der erfindungsgemäß im Spundstopfen ausgebildete Belüftungsstopfen ermöglicht eine Belüftung des Innenbehälters, ohne dass hierzu der Spundstopfen durch Verwendung des Montagewerkzeugs aus dem Spundstutzen entfernt werden müsste. Vielmehr ist es für eine Belüftung des Behälterinnenraums des Spundbehälters ausreichend, den Belüftungsstopfen so weit aus der Aufnahmebohrung herauszudrehen, dass die in Schließstellung des Belüftungsstopfens die im Muldenboden ausgebildete Belüftungsöffnung abdeckende Deckelscheibe vom Muldenboden abgehoben ist. Ein Luftzutritt in den Behälterinnenraum kann dabei über einen zwischen einem Umfangsrand der Deckelscheibe und einer Innenwand der Stopfenmulde ausgebildeten Belüftungsspalt oder durch in der Deckelscheibe ausgebildete Öffnungen erfolgen, die keine Überdeckung mit der im Muldenboden ausgebildeten Belüftungsöffnung aufweisen.

Die an der Deckelscheibe ausgebildete Handhabungseinrichtung ermöglicht eine Betätigung des Belüftungsstopfens, also sowohl ein Herausdrehen des Gewindebolzens des Belüftungsstopfens aus der im Muldenboden ausgebildeten Aufnahmebohrung, als auch ein Hineindrehen des Belüftungsstopfens in die Aufnahmebohrung, ohne dass hierzu der Einsatz eines Werkzeugs notwendig wäre. Da, wie vorstehend ausgeführt, bereits ein Abheben der Deckelscheibe vom Muldenboden ausreichend ist, um eine Belüftung des Behälterinnenraums zu ermöglichen, kann der Belüftungsstopfen auch in seiner Belüftungsposition unverlierbar mit dem Spundstopfen verbunden bleiben.

Vorzugsweise weist der Gewindebolzen eine Federeinrichtung zur Abstützung gegen eine Wandoberfläche der Aufnahmebohrung oder die Aufnahmebohrung eine Federeinrichtung zur Abstützung gegen eine Wandoberfläche des Gewindebolzens auf, derart, dass zwischen dem Gewindebolzen und der Aufnahmebohrung eine Vorspannkraft wirksam ist.

Aufgrund der am Gewindebolzen des Belüftungsstopfens oder der Aufnahmebohrung im Muldenboden ausgebildeten Federeinrichtung kann durch den mittels der Federeinrichtung zwischen dem Gewindebolzen und der Aufnahmebohrung ausgebildeten Reibschluss eine definierte axiale Positionierung des Belüftungsstopfens im Muldenboden erreicht werden, ohne dass im Gewindeeingriff eine ausreichende Hemmung ausgebildet sein müsste. Damit ist es möglich, das Gewinde des Gewindebolzens bzw. das Innengewinde der Aufnahmebohrung sehr steil auszubilden, um mit einer minimalen Anzahl von Umdrehungen den Belüftungsstopfen aus seiner Schließstellung in die maximale Öffnungsstellung, in der zwischen dem Muldenboden und der Deckelscheibe ein maximaler Abstand ausgebildet ist, zu überführen. Zudem verhindert die mittels der Federeinrichtung reibschlüssige axiale Positionierung zwischen dem Gewinde des Gewindebolzens und dem Innengewinde der Aufnahmebohrung, dass eine vom Bediener gewählte Öffnungsstellung des Belüftungsstopfens durch äußere Einwirkungen, wie etwa Vibrationen des Behälters beeinflusst wird und sich der Belüftungsstopfen schwerkraftbetätigt in seine Schließstellung bewegen könnte. Ebenso wie die Öffnungsstellung des Belüftungsstopfens ist auch die Schließstellung des Belüftungsstopfens durch den mittels der Federeinrichtung erzeugten Reibschluss definiert.

Bei einer vorteilhaften Ausführungsform ist die Federeinrichtung an einer durch eine Gewindeoberfläche ausgebildeten Wandoberfläche des Gewindebolzens oder der Aufnahmebohrung ausgebildet, sodass eine in den Gewindebolzen oder die Aufnahmebohrung integrierte Ausgestaltung der Federeinrichtung möglich ist.

Wenn die Federeinrichtung zumindest eine am Gewindebolzen ausgebildete und einen Gewindekern des Gewindebolzens mit einem Laschenkopf radial überragende Federlasche aufweist, kann die Federeinrichtung in einem gemeinsamen Fertigungsschritt zusammen mit dem Gewindebolzen hergestellt werden.

Wenn die Federeinrichtung eine Mehrzahl mit ihren Laschenköpfen in einer gemeinsamen Horizontalebene des Gewindebolzens angeordnete Federlaschen aufweist, kann eine über den Umfang des Gewindebolzens verteilte radiale reibschlüssige Abstützung des Gewindebolzens in der Aufnahmebohrung erreicht werden.

Vorzugsweise sind die Federlaschen an einem unteren Ende des Gewindebolzens angeordnet, so dass der Gewindeeingriff zwischen dem Bolzengewinde und dem Innengewinde der Aufnahmebohrung nicht beeinträchtigt wird.

Besonders vorteilhaft im Hinblick auf eine möglichst kurze Ausbildung des Gewindebolzens oder der Aufnahmebohrung ist es, wenn die Federeinrichtung an einem Gewindegangabschnitt des Gewindebolzens oder des Innengewindes der Aufnahmebohrung ausgebildet ist. Die Federeinrichtung bildet somit einen Bestandteil des Gewindegangs aus und erfüllt daher eine Doppelfunktion.

Besonders bevorzugt ist es, wenn die Federeinrichtung zumindest eine an einem Gewindegangabschnitt ausgebildete Federlasche mit einem am Gewindegangabschnitt ausgebildeten radialen Gewindegangvorsprung aufweist, sodass der Gewindekern zur Ausbildung des elastisch federnden Laschenteils und der Gewindegang selbst zur Ausbildung eines radial vom Gewindekern abstehenden Laschenkopfs dienen.

Besonders vorteilhaft wird hierdurch ein kontinuierlicher Übergang zwischen dem Laschenkopf und dem angrenzenden Gewindegangabschnitt ausgestaltet ist, sodass die Gewindefunktion durch den Laschenkopf so wenig wie möglich beeinträchtigt wird.

Vorzugsweise weist die Deckelscheibe eine Rasteinrichtung auf, die mit einer in der Stopfenmulde angeordneten Gegenrasteinrichtung zusammenwirkt, derart, dass die axiale Relativbewegung der Deckelscheibe in der Stopfenmulde einerseits durch den Muldenboden und andererseits durch die Gegenrasteinrichtung begrenzt ist, sodass durch die Gegenrasteinrichtung eine maximale Öffnungsposition des Belüftungsstopfens definiert ist.

Vorzugsweise weist die Gegenrasteinrichtung Gegenrastelemente auf, die an der Innenwand der Stopfenmulde angeordnet sind und zur Verrastung mit einem an einem Eingriffskörper einer in die Stopfenmulde eingesetzten Siegelkappe ausgebildeten ringförmigen Rastvorsprung ausgebildet sind.

Eine derartige Ausgestaltung ermöglicht es, gegebenenfalls ohnehin zur Verrastung mit einer Siegelkappe, die den Zugriff auf die Stopfenmulde manipulationssicher macht, an der Innenwand der Stopfenmulde ausgebildete Gegenrastelemente auch zur Definition der maximalen Öffnungsstellung des Belüftungsstopfens zu nutzen.

Bei einer besonderen Ausführungsform des Spundstopfenverschlusses, bei dem der Spundstopfen eine am Muldenboden ausgebildete Gasaustauscheinrichtung zur Be- und Entlüftung eines Behälterinnenraums des Spundbehälters aufweist, weist zur Ausbildung einer Gasaustauschöffnung der in der Aufnahmebohrung angeordnete Gewindebolzen eine als Gasaustauschbohrung dienende Durchgangsbohrung auf, sodass der Belüftungsstopfen einen integralen Bestandteil der Gasaustauscheinrichtung bildet.

Nachfolgend wird eine bevorzugte Ausführungsform der Erfindung anhand der Zeichnungen näher erläutert.

Es zeigen:
- **Fig. 1**: ein Spundstopfenverschluss mit einem in einem Spundstopfen angeordneten Belüftungsstopfen in isometrischer Darstellung;
- **Fig. 2**: den in **Fig. 1** dargestellten Spundstopfenverschluss mit dem in Schließstellung angeordneten Belüftungsstopfen in Schnittdarstellung gemäß Schnittlinienverlauf II-II;
- **Fig. 3**: den in **Fig. 2** dargestellten Spundstopfenverschluss mit dem in Öffnungsstellung angeordneten Belüftungsstopfen;
- **Fig. 4**: den in **Fig. 1** dargestellten Spundstopfen in Unteransicht;
- **Fig. 5**: einen Spundstopfenverschluss in einer weiteren Ausführungsform in einer **Fig. 2** entsprechenden Darstellung mit einem in Schließstellung angeordneten Belüftungsstopfen;
- **Fig. 6**: den Belüftungsstopfen der in den **Fign. 1** bis **3** dargestellten Ausführungsformen des Spundstopfenverschlusses in Schnittdarstellung;
- **Fig. 7**: den Belüftungsstopfen der in **Fig. 5** dargestellten Ausführungsform des Spundstopfenverschlusses in Schnittdarstellung;
- **Fig. 8**: einen Spundstopfenverschluss in einer **Fig. 2** entsprechenden Darstellung mit einer weiteren Ausführungsform eines Belüftungsstopfens in Schließstellung;
- **Fig. 9**: den in **Fig. 8** dargestellten Spundstopfenverschluss mit dem in Öffnungsstellung angeordneten Belüftungsstopfen;
- **Fig.10**: einen Spundstopfenverschlussen in einer **Fig. 2** entsprechenden Darstellung mit einer weiteren Ausführungsform eines Belüftungsstopfens in Schließstellung;
- **Fig. 11**: den in **Fig. 8** dargestellten Belüftungsstopfen in Einzeldarstellung:
- **Fig. 12**: den in **Fig. 10** dargestellten Belüftungsstopfen in Einzeldarstellung.

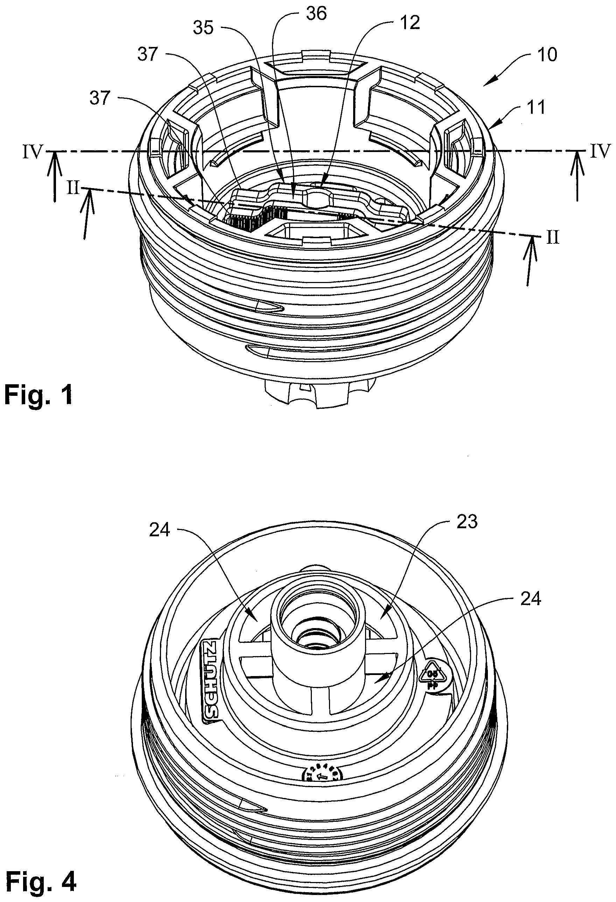

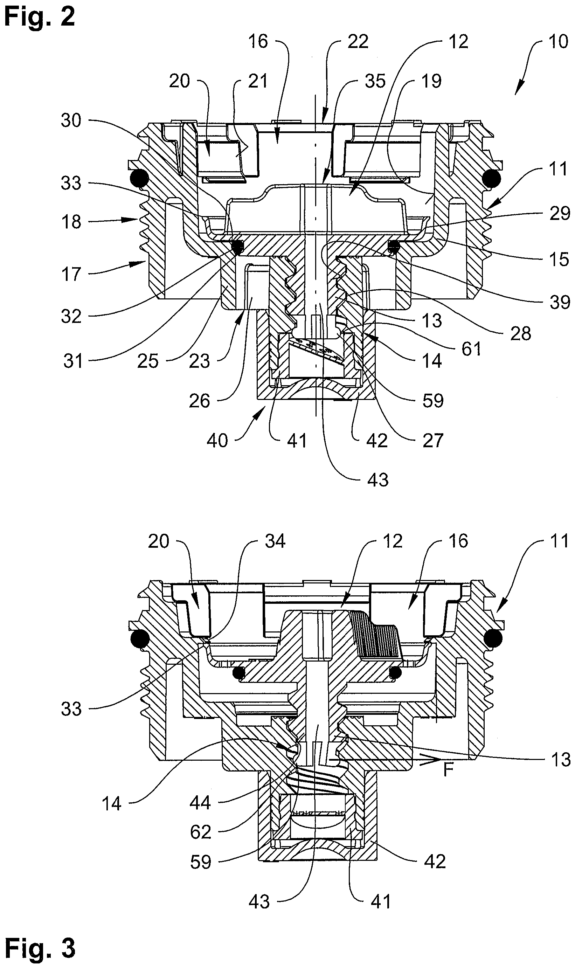

**Fig. 1** zeigt in einer ersten Ausführungsform einen Spundstopfenverschluss 10 mit einem in einen Spundstopfen 11 angeordneten Belüftungsstopfen 12, der, wie insbesondere **Fig. 2** zeigt, mit einem Gewindebolzen 13 in eine Aufnahmebohrung 14 eingesetzt ist, die sich in einem Muldenboden 15 einer im Spundstopfen 11 ausgebildeten Stopfenmulde 16 befindet.

Der Spundstopfen 11 ist an seiner Umfangswand 17 mit einem Stopfengewinde 18 versehen, mit dem der Spundstopfen 11 in einen hier nicht näher dargestellten Spundstutzen eingeschraubt werden kann, der an einem insbesondere als Spundfass ausgebildeten Spundbehälter angeordnet ist. Weiterhin ist es möglich, den Spundstopfen 11 in einen in einem Schraubdeckel ausgebildeten Spundstutzen einzuschrauben, wobei der Schraubdeckel zum Verschluss einer im Vergleich zum Spundstutzen vergrößerten Einfüllöffnung an einem Intermediate Bulk Container (IBC) dient.

Die in dem Spundstopfen 11 ausgebildete Stopfenmulde 16 dient zum Einführen eines Werkzeugs, mit dem der Spundstopfen 11 in den jeweiligen Spundstutzen eingedreht oder ausgedreht werden kann. Zum Eingriff des Werkzeugs sind in einer Innenwand 19 der Stopfenmulde 16 Wandrücksprünge 20 ausgebildet, derart, dass an dem Werkzeug ausgebildeten, hier nicht näher dargestellte Mitnehmer in die Wandrücksprünge 20 eingreifen können, um zwischen den Mitnehmern und Anschlagflächen 21 von durch die Wandrücksprünge 20 in der Innenwand 19 ausgebildeten Anschlagkörpern 22 ein Drehmoment zu übertragen.

Wie **Fig. 2** weiter zeigt, ist der Muldenboden 15 zusätzlich zu der Aufnahmebohrung 14 mit einer Belüftungsöffnung 23 versehen, die im vorliegenden Fall, wie auch der **Fig. 4** zu entnehmen ist, vier Öffnungssegmente 24 aufweist, die dadurch ausgebildet sind, dass ein am Muldenboden 15 zylinderförmig ausgebildeter Randsteg 25 über speichenartig angeordnete, radiale Verbindungsstege 26 mit einer hülsenförmigen Nabe 27 des Muldenbodens 15 verbunden sind, die die Aufnahmebohrung 14 ausbildet, welche mit einem Innengewinde 39 versehen ist, das zur Herstellung eines Gewindeeingriffs mit einem Außengewinde 28 des am Belüftungsstopfen 12 ausgebildeten Gewindebolzens 13 dient.

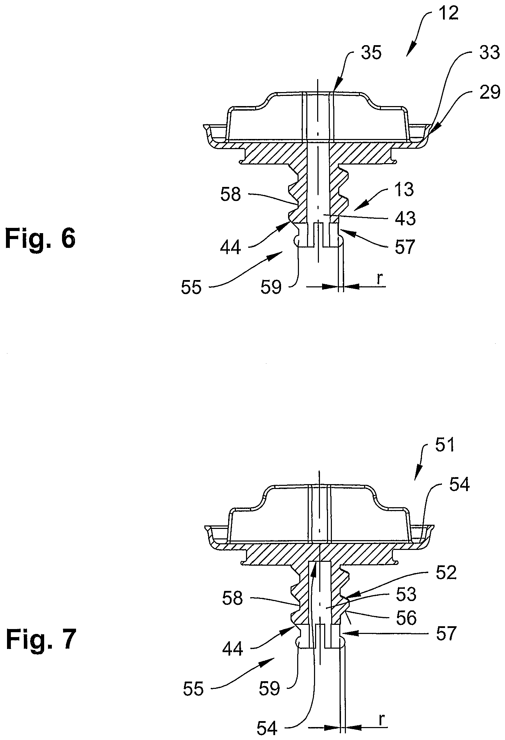

Wie insbesondere **Fig. 6** zeigt, weist der Belüftungsstopfen 12 eine mit dem Gewindebolzen 13 verbundene Deckelscheibe 29 auf, die in der in **Fig. 2** dargestellten Schließstellung des Belüftungsstopfens 12 zur Abdichtung der Belüftungsöffnung 23 dient. In der Schließstellung liegt die Deckelscheibe 29 am Muldenboden 15 an, wobei zur Abdichtung zwischen einem Öffnungsrand 30 der Belüftungsöffnung 23 und der Deckelscheibe 29 in einer an einer Unterseite der Deckelscheibe 29 ausgebildeten Ringnut 31 eine Dichtung 32 angeordnet ist.

Die Deckelscheibe 29 weist einen als Rasteinrichtung 33 ausgebildeten Umfangsrand auf, der, wie bei einem Vergleich der **Fig. 2** mit der **Fig. 3****,** in der der Belüftungsstopfen 12 in einer Öffnungsstellung dargestellt ist, deutlich wird, eine maximale Öffnungsposition des Belüftungsstopfens 12 dadurch definiert, dass die Rasteinrichtung 33 gegen im Bereich der Wandrücksprünge 20 an der Innenwand 19 der Stopfenmulde 16 angeordnete Gegenrastelemente 34 anschlägt. Dadurch, dass die Gegenrastelemente 34 die maximale Öffnungsstellung des Belüftungsstopfens 12 begrenzen, bei der sich der Gewindebolzen 13 des Belüftungsstopfens 12 immer noch im Eingriff mit dem Innengewinde der Aufnahmebohrung 14 befindet, ist der Belüftungsstopfen 12 zum einen eindeutig in seiner maximalen Öffnungsstellung definiert und zum anderen verliersicher mit Spundstopfen 11 verbunden.

Bei einer Montage des Belüftungsstopfens 12 in der Stopfenmulde 16 des Spundstopfens 11 wird der Gewindebolzen 13 in die Aufnahmebohrung 14 eingeschraubt, wobei beim Einschraubvorgang aufgrund einer elastischen Deformation der Rasteinrichtung 33 die an der Innenwand 19 der Stopfenmulde 16 ausgebildeten Gegenrastelemente 34 überwunden werden können.

Zur Durchführung des Montagevorgangs sowie zur Überführung des Belüftungsstopfens 12 von der in **Fig. 2** dargestellten Schließstellung in die in **Fig. 3** dargestellte Öffnungsstellung ist die Deckelscheibe 29 auf ihrer Oberseite mit einer Handhabungseinrichtung 35 versehen, die im vorliegenden Fall, wie insbesondere **Fig. 1** zeigt, zwei einander gegenüberliegende, durch einen Spalt 36 voneinander getrennte Griffstege 37 aufweist, wobei insbesondere zur Erleichterung der Installation des Belüftungsstopfens 12 in der Stopfenmulde 16 der zwischen den Griffstegen 37 ausgebildete Spalt 36 für einen Werkzeugeingriff, also insbesondere den Einsatz eines Schraubendrehers, genutzt werden kann.

Bei der in den **Fign. 1** bis **3** dargestellten Ausführungsform des Spundstopfenverschlusses 10 ist dieser mit einer von der Funktion bzw. Anordnung des Belüftungsstopfens 12 in seiner in **Fig. 2** dargestellten Schließstellung oder seiner in **Fig. 3** dargestellten Öffnungsstellung unabhängigen Gasaustauscheinrichtung 38 versehen, die zur permanenten Be- und Entlüftung des Behälterinnenraums eines mit dem Spundstopfen 11 verschlossenen Spundbehälters dient.

Zur Ausbildung der Gasaustauscheinrichtung 38 ist die die Aufnahmebohrung 14 ausbildende am Muldenboden 15 ausgebildete Nabe 27 an ihrem unteren Ende mit einem Gasaustauschmodul 40 versehen, das einen in das untere Ende der Nabe 27 eingesetzten Membraneinsatz 41 sowie einen auf das untere Ende der Nabe 27 aufgestülpten Schwallschutz 42 aufweist. Darüber hinaus ist der Gewindebolzen 13 des Belüftungsstopfens 12 sowie die Deckelscheibe 29 des Belüftungsstopfens 12 mit einer durchgängigen Gasaustauschbohrung 43 versehen, so dass unabhängig von der Stellung des Belüftungsstopfens 12 ein permanenter Gasaustausch über die Gasaustauschbohrung 43 und das Gasaustauschmodul 40 möglich ist.

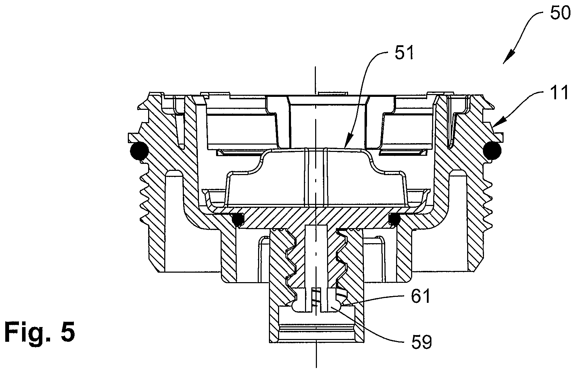

**Fig. 5** zeigt in einer weiteren Ausführungsform einen Spundstopfenverschluss 50, der einen identisch mit dem Spundstopfenverschluss 10 ausgebildeten Spundstopfen 11 aufweist; jedoch abweichend von dem Spundstopfenverschluss 10 einen in der Stopfenmulde 16 angeordneten Belüftungsstopfen 51 aufweist, der, wie insbesondere **Fig. 7** zeigt, keine durchgängig ausgebildete Gasaustauschbohrung 43 aufweist, sondern lediglich eine im Gewindebolzen 52 ausgebildete Sackbohrung 53 mit einem durch eine Deckelscheibe 54 ausgebildeten Bohrungsgrund 54.

Wie ein unmittelbarer Vergleich der in den **Fig. 6** und **7** jeweils dargestellten Belüftungsstopfen 12 und 51 zeigt, erschöpft sich der Unterschied in der Ausgestaltung der Belüftungsstopfen 12 und 51 darin, dass der Belüftungsstopfen 12 mit der im Belüftungsstopfen 12 durchgängig ausgebildeten Gasaustauschbohrung 43 versehen ist, wohingegen der Belüftungsstopfen 51 lediglich die Sackbohrung 53 im Gewindebolzen 52 aufweist. Übereinstimmend bilden sowohl der Gewindebolzen 13 als auch der Gewindebolzen 52 aufgrund der Gasaustauschbohrung 43 bzw. der Sackbohrung 53 eine Gewindehülse 44 aus, wobei die Gewindehülse 44 eine in den dargestellten Ausführungsbeispielen am unteren Ende des Gewindebolzens 13 bzw. 52 ausgebildete Federeinrichtung 55 aufweist. Die Federeinrichtung 55 ist jeweils an einer durch eine Gewindeoberfläche 56 ausgebildeten Wandoberfläche des Gewindebolzens 13, 52 ausgebildet, wobei die Federeinrichtung 55 im vorliegenden Fall vier gleichmäßig über den Umfang des Gewindebolzens 13, 52 verteilt angeordnete Federlaschen 57 aufweist, die jeweils aus einem Segment der Gewindehülse 44 gebildet sind und einen Gewindekern 58 des Gewindebolzens 13, 52 mit einem radialen Überstand r überragen, wobei im vorliegenden Fall der radiale Überstand r jeweils durch einen am distalen Ende der Federlaschen 57 ausgebildeten Laschenkopf 59 gebildet ist. Die von den Segmenten ausgebildeten Federlaschen 57 sind durch Spalte 60 voneinander getrennt, so dass die Federlaschen 57 unabhängig voneinander radiale Bewegungen ausführen können.

Wie die **Fig. 2, 3** und **5** zeigen, wird unabhängig von der Relativposition des Belüftungsstopfens 12 bzw. 51 in der Aufnahmebohrung 14 durch die Ausbildung des Überstands r der Laschenköpfe 59 über den Gewindekern 58 zumindest von einem der in einer gemeinsamen Horizontalebene angeordneten Laschenköpfe 59 eine elastische Vorspannkraft F auf einen Gewindegangabschnitt 61 und 62 ausgeübt, so dass unabhängig von einer zwischen dem Außengewinde 28 des Gewindebolzens 13, 52 und dem Innengewinde 39 der Aufnahmebohrung 14 ausgebildeten Reibkraft aufgrund der radialen Vorspannkraft eine Fixierung des Belüftungsstopfens 12, 51 in einer beliebigen axialen Position des Belüftungsstopfens 12, 51 in der Aufnahmebohrung 14 erfolgt. Damit ist es möglich, den Gewindeeingriff zwischen dem Außengewinde 28 des Gewindebolzens 13, 52 und dem Innengewinde 39 der Aufnahmebohrung 14 so auszugestalten, dass der Gewindeeingriff möglichst leichtgängig erfolgt.

Da aufgrund der vorteilhaften Wirkung der Federeinrichtung 55 eine selbsthemmende Wirkung im Gewindeeingriff zwischen dem Außengewinde 28 des Gewindebolzens 13, 52 und dem Innengewinde 39 der Aufnahmebohrung 14 zur Fixierung der axialen Position des Belüftungsstopfens 12, 51 in der Aufnahmebohrung 14 nicht notwendig ist, kann die Eingriffsfläche zwischen dem Außengewinde 28 und dem Innengewinde 27 minimiert werden, also das Außengewinde 28 und das Innengewinde 39 möglichst steil mit einem entsprechend kurz ausgebildeten Gewindegang ausgebildet werden, so dass der Belüftungsstopfen mit einer geringstmöglichen Anzahl von Umdrehungen von seiner Öffnungsstellung in die Schließstellung und umgekehrt überführt werden kann.

Die Federeinrichtung 55 ermöglicht es auch, dass selbst ein großes Spiel im Gewindeeingriff die Funktion des Belüftungsstopfens 12, 51 nicht beeinträchtigen kann. Dies erweist sich insbesondere dann als vorteilhaft, wenn der mit dem Spundstopfenverschluss 10, 50 versehende Spundbehälter größeren Temperaturschwankungen ausgesetzt ist, die bei einem zu geringem Spiel im Gewindeeingriff zu einem Klemmen des Belüftungsstopfens 11, 51 in der Aufnahmebohrung 14 führen könnten.

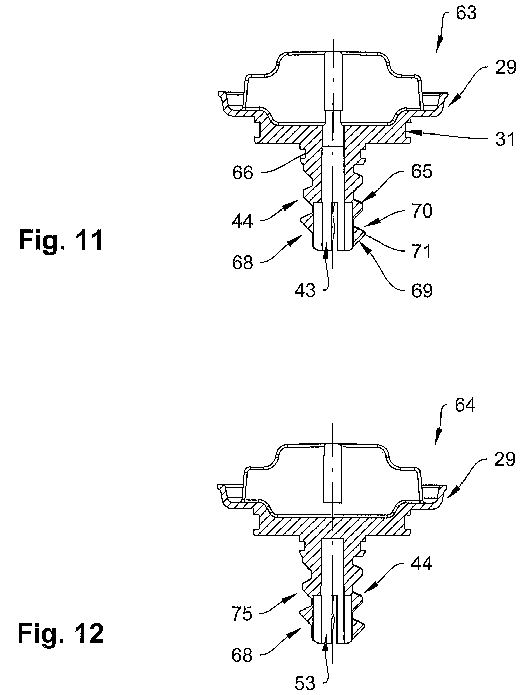

In den **Fig. 11** und **12** sind als weitere Ausführungsformen Belüftungsstopfen 63 und 64 dargestellt, wobei der Belüftungsstopfen 63 in seiner Funktion dem in **Fig. 6** dargestellten Belüftungsstopfen 12 und der Belüftungsstopfen 64 in seiner Funktion dem in **Fig. 7** dargestellten Belüftungsstopfen 51 entspricht.

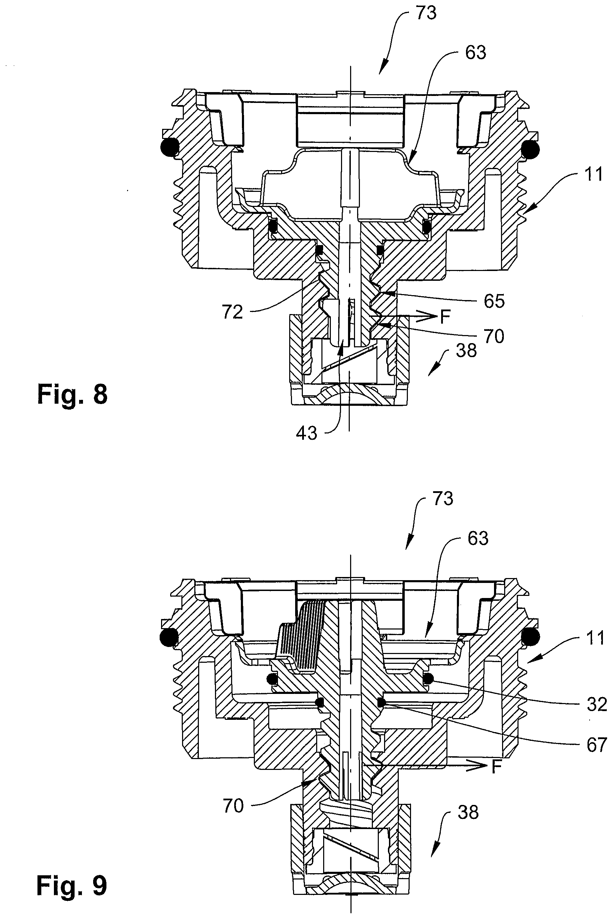

Wie in den **Fig. 8** und **9****,** die einen Spundstopfenverschluss 73 zeigen, dargestellt ist, dient der Belüftungsstopfen 63 zur Kombination mit einem Spundstopfen 11 und weist in Übereinstimmung mit dem Belüftungsstopfen 12 einen als Gewindehülse 44 ausgebildeten Gewindebolzen 65 auf, der mit einer durchgängigen Gasaustauschbohrung 43 versehen ist. Im Übrigen ist der Belüftungsstopfen 63 in Übereinstimmung mit dem Belüftungsstopfen 12 mit einer Deckelscheibe 29 versehen, die an einer Unterseite eine Ringnut 31 zur Aufnahme einer Dichtung 32 aufweist. Zusätzlich zur Ringnut 31, ist am oberen, benachbart der Unterseite der Deckelscheibe 29 ausgebildeten Ende des Gewindebolzens 65 eine weitere Ringnut 66 vorgesehen, die, wie die **Fig. 8** und **9** zeigen, zur Aufnahme einer weiteren, hier als O-Ring ausgebildeten Dichtung 67 dienen. Wie anhand **Fig. 8** nachvollziehbar, besteht die Funktion der weiteren Dichtung 67 darin, eine Abdichtung zwischen der Aufnahmebohrung 14 und der, wie insbesondere **Fig. 4** zeigt, aus den Öffnungssegmenten 24 zusammengesetzten Belüftungsöffnung 23 zu ermöglichen.

Der Belüftungsstopfen 63 ist am unteren Ende des Gewindebolzens 67 mit einer Federeinrichtung 68 versehen, die vier gleichmäßig über den Umfang des Gewindebolzens 65 verteilt angeordnete Federlaschen 69 aufweist, die jeweils aus einem Segment des als Gewindehülse 44 ausgebildeten Gewindebolzens 65 gebildet sind, wobei die Federlaschen 69 im Unterschied zu den Federlaschen 57 des Belüftungsstopfens 12 einen an einem unteren Gewindegangabschnitt 70 ausgebildeten radialen Gewindegangvorsprung 71 aufweisen, der entsprechend dem Verlauf des Gewindegangabschnitts 70 nicht, wie die Laschenköpfe 59 der Federeinrichtung 55 des Belüftungsstopfens 12 in einer horizontalen Ebene angeordnet ist, sondern helixförmig verläuft.

Wie aus den **Fig. 8** bis **10** ersichtlich, wird durch den radialen Gewindegangvorsprung 71 in dem zwischen dem Gewindebolzen 65 und der Aufnahmebohrung 14 ausgebildeten Gewindeeingriff eine radial wirkende elastische Vorspannkraft F ausgeübt, sodass unabhängig von einer zwischen einem oberen Gewindegangabschnitt 71 des Außengewindes 28 des Gewindebolzens 65 und dem Innengewinde 39 der Aufnahmebohrung 14 ausgebildeten Reibkraft in dem unteren Gewindegangabschnitt 70 aufgrund der radialen Vorspannkraft F eine Fixierung des Belüftungsstopfens 63 in einer beliebigen axialen Position des Belüftungsstopfens 63 in der Aufnahmebohrung 14 erfolgt.

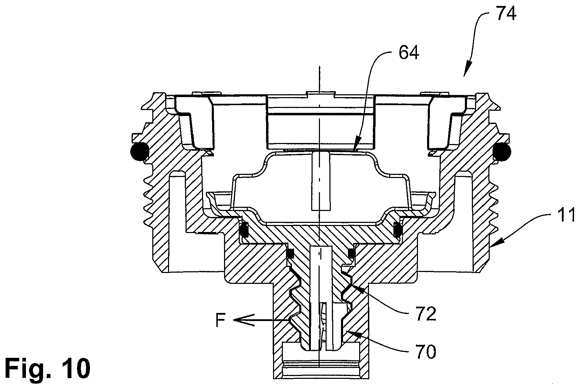

Wie ein unmittelbarer Vergleich der in den **Fig. 11** und **12** jeweils dargestellten Belüftungsstopfen 63 und 64 zeigt, erschöpft sich der Unterschied in der Ausgestaltung der Belüftungsstopfen 63 und 64 darin, dass der Belüftungsstopfen 63 mit der im Belüftungsstopfen 63 durchgängig ausgebildeten Gasaustauschbohrung 43 versehen ist, wohingegen der Belüftungsstopfen 64 in einem Gewindebolzen 75 lediglich die Sackbohrung 53 aufweist und daher, wie in **Fig. 10** dargestellt, in Kombination mit dem Spundstopfen 11, der keine Gasaustauscheinrichtung 38 aufweist, zur Ausbildung eines Spundstopfenverschlusses 74 dient.

## Patentansprüche

1. Spundstopfenverschluss (10, 50, 73, 74) für Spundbehälter mit einem Spundstopfen (11) zur Anordnung in einem Spundstutzen des Spundbehälters, wobei der Spundstopfen (11) eine Stopfenmulde (16) zur Einführung eines Montagewerkzeugs aufweist, wobei die Stopfenmulde (16) einen mit zumindest einer Belüftungsöffnung (23) versehenen Muldenboden (15) aufweist, und der Spundstopfen (11) mit einem in der Stopfenmulde (16) angeordneten Belüftungsstopfen (12, 51, 63, 64) versehen ist, der mit einem Gewindebolzen (13, 52, 65, 75) in einem Innengewinde (39) einer im Muldenboden (15) unabhängig von der Belüftungsöffnung (23) ausgebildeten Aufnahmebohrung (14) aufgenommen ist und eine mit einer Handhabungseinrichtung (35) versehene und mit dem Gewindebolzen (13, 52, 65, 75) verbundene Deckelscheibe (29, 54) zur Abdichtung der Belüftungsöffnung (23) in einer Schließstellung des Belüftungsstopfens (12, 51, 63, 64) aufweist,
**dadurch gekennzeichnet,**
**dass** die Belüftungsöffnung (23) zusätzlich zu der Aufnahmebohrung (14) ausgebildet ist.

2. Spundstopfenverschluss nach Anspruch 1,
**dadurch gekennzeichnet,**
**dass** der Gewindebolzen (13, 52, 65, 75) eine Federeinrichtung (55, 68) zur Abstützung gegen eine Wandoberfläche der Aufnahmebohrung (14) oder die Aufnahmebohrung (14) eine Federeinrichtung zur Abstützung gegen eine Wandoberfläche des Gewindebolzens (13, 52, 65, 75) aufweist, derart, dass zwischen dem Gewindebolzen (13, 52, 65, 75) und der Aufnahmebohrung (14) eine Vorspannkraft (F) wirksam ist.

3. Spundstopfenverschluss nach Anspruch 2,
**dadurch gekennzeichnet,**
**dass** die Federeinrichtung (55, 68) an einer durch eine Gewindeoberfläche (56) ausgebildeten Wandoberfläche des Gewindebolzens (13, 52, 65, 75) oder der Aufnahmebohrung (14) ausgebildet ist.

4. Spundstopfenverschluss nach Anspruch 3,
**dadurch gekennzeichnet,**
**dass** die Federeinrichtung (55) zumindest eine am Gewindebolzen (13, 52) ausgebildete und einen Gewindekern (58) des Gewindebolzens (13, 52) mit einem Laschenkopf (59) radial überragende Federlasche (57) aufweist.

5. Spundstopfenverschluss nach Anspruch 4,
**dadurch gekennzeichnet,**
**dass** die Federeinrichtung (55) eine Mehrzahl mit ihren Laschenköpfen (59) in einer gemeinsamen Horizontalebene des Gewindebolzens (13, 52) angeordnete Federlaschen (57) aufweist.

6. Spundstopfenverschluss nach Anspruch 5,
**dadurch gekennzeichnet,**
**dass** die Federlaschen (57) an einem unteren Ende des Gewindebolzens (13, 52) angeordnet sind.

7. Spundstopfenverschluss nach Anspruch 3,
**dadurch gekennzeichnet,**
**dass** die Federeinrichtung (68) an einem Gewindegangabschnitt (70) des Gewindebolzens (65) oder des Innengewindes (39) der Aufnahmebohrung (14) ausgebildet ist.

8. Spundstopfenverschluss nach Anspruch 7,
**dadurch gekennzeichnet,**
**dass** die Federeinrichtung (68) zumindest eine an einem Gewindegangabschnitt (70) ausgebildete Federlasche (69) mit einem am Gewindegangabschnitt ausgebildeten radialen Gewindegangvorsprung (71) aufweist.

9. Spundstopfenverschluss nach einem der vorangehenden Ansprüche,
**dadurch gekennzeichnet,**
**dass** die Deckelscheibe (29) eine Rasteinrichtung (33) aufweist, die mit einer in der Stopfenmulde (16) angeordneten Gegenrasteinrichtung zusammenwirkt, derart, dass die axiale Relativbewegung der Deckelscheibe (29) in der Stopfenmulde (16) einerseits durch den Muldenboden (15) und andererseits durch die Gegenrasteinrichtung begrenzt ist.

10. Spundstopfenverschluss nach Anspruch 9,
**dadurch gekennzeichnet,**
**dass** die Gegenrasteinrichtung Gegenrastelemente (34) aufweist, die an einer Innenwand (19) der Stopfenmulde (16) angeordnet sind und zur Verrastung mit einem an einem Eingriffskörper einer in die Stopfenmulde (16) eingesetzten Siegelkappe ausgebildeten ringförmigen Rastvorsprung ausgebildet sind.

11. Spundstopfenverschluss nach einem der vorangehenden Ansprüche,
**dadurch gekennzeichnet,**
**dass** der Spundstopfen (11) eine am Muldenboden (15) ausgebildete Gasaustauscheinrichtung (38) zur Be- und Entlüftung eines Behälterinnenraums des Spundbehälters mit einer im Muldenboden (15) angeordneten Gasaustauschöffnung aufweist, wobei zur Ausbildung der Gasaustauschöffnung der in der Aufnahmebohrung (14) angeordnete Gewindebolzen (13, 65) eine als Gasaustauschbohrung (43) dienende Durchgangsbohrung aufweist.

## Claims

1. A bung plug seal (10, 50, 73, 74) for bung containers, the bung plug seal having a bung plug (11) for being disposed in a bung socket of the bung container, the bung plug (11) having a plug depression (16) for inserting a fitting tool, the plug depression (16) having a depression bottom (15) provided with at least one ventilation opening (23) and the bung plug (11) being provided with a ventilation plug (12, 51, 63, 64) which is disposed in the plug depression (16) and which has a thread bolt (13, 52, 65, 75) accommodated in an internal thread (39) of a receiving hole (14) formed in the depression bottom (15) independently of the ventilation opening (23) and which has a lid disk (29, 54) provided with a handling unit (35) and connected to the thread bolt (13, 52, 65, 75) for sealing the ventilation opening (23) in a closed position of the ventilation plug (12, 51, 63, 64),
**characterized in that**
the ventilation opening (23) is formed in addition to the receiving hole (14).

2. The bung plug seal according to claim 1,
**characterized in that**
the thread bolt (13, 52, 65, 75) has a spring member (55, 68) for being supported against a wall surface of the receiving hole (14) or the receiving hole (14) has a spring member for being supported against a wall surface of the thread bolt (13, 52, 65, 75), in such a manner that a preload force (F) is effective between the thread bolt (13, 52, 65, 75) and the receiving hole (14).

3. The bung plug seal according to claim 2,
**characterized in that**
the spring member (55, 68) is formed on a wall surface of the thread bolt (13, 52, 65, 75) or the receiving hole (14), said wall surface being formed by a thread surface (56).

4. The bung plug seal according to claim 3,
**characterized in that**
the spring member (55) has at least one spring tab (57) which is formed on the thread bolt (13, 52) and which has a tab head (59) radially protruding a thread core (58) of the thread bolt (13, 52).

5. The bung plug seal according to claim 4,
**characterized in that**
the spring member (55) has a plurality of spring tabs (57) whose tab heads (59) are disposed in a shared horizontal plane of the thread bolt (13, 52).

6. The bung plug seal according to claim 5,
**characterized in that**
the spring tabs (57) are disposed on a lower end of the thread bolt (13, 52).

7. The bung plug seal according to claim 3,
**characterized in that**
the spring member (68) is formed on a thread section (70) of the thread bolt (65) or of the internal thread (39) of the receiving hole (14).

8. The bung plug seal according to claim 7,
**characterized in that**
the spring member (68) has at least one spring tab (69) formed on a thread section (70), said spring tab (69) having a radial thread protrusion (71) formed on the thread section.

9. The bung plug seal according to any one of the preceding claims,
**characterized in that**
the lid disk (29) has a locking member (33) which interacts with a counter-locking member disposed in the plug depression (16), in such a manner that the axial relative movement of the lid disk (29) in the plug depression (16) is limited by the depression bottom (15) on one side and by the counter-locking member on the other side.

10. The bung plug seal according to claim 9,
**characterized in that**
the counter-locking member has counter-locking elements (34) which are disposed on an inner wall (19) of the plug depression (16) and which are formed so as to interlock with an annular locking protrusion which is formed on an engagement member of a sealing cap which is inserted into the plug depression (16).

11. The bung plug seal according to any one of the preceding claims,
**characterized in that**
the bung plug (11) has a gas exchange mechanism (38) formed on the depression bottom (15) for ventilating and de-airing a container interior of the bung container, the gas exchange mechanism (38) having a gas exchange opening which is disposed in the depression bottom (15), the thread bolt (13, 65) which is disposed in the receiving hole (14) having a passage hole which serves as a gas exchange hole (43) for forming the gas exchange opening.

## Revendications

1. Fermeture à bouchon de bonde (10, 50, 73, 74) pour des récipients à bondon, la fermeture à bouchon de bonde comprenant un bouchon de bonde (11) destiné à être disposé dans un manchon de bonde du récipient à bondon, le bouchon de bonde (11) ayant un creux de bouchon (16) pour insérer un outil de montage, le creux de bouchon (16) ayant un fond de creux (15) muni d'au moins une ouverture de ventilation (23) et le bouchon de bonde (11) étant muni d'un bouchon de ventilation (12, 51, 63, 64) qui est disposé dans le creux de bouchon (16) et qui a un boulon fileté (13, 52, 65, 75) reçu dans un filetage intérieur (39) d'un trou de réception (14) formé dans le fond de creux (15) indépendamment de l'ouverture de ventilation (23) et qui a une disque de couvercle (29, 54) munie d'une unité de manutention (35) et liée au boulon fileté (13, 52, 65, 75) pour étancher l'ouverture de ventilation (23) dans une position de fermeture du bouchon de ventilation (12, 51, 63, 64),
**caractérisée en ce que**
l'ouverture de ventilation (23) est formée en plus du trou de réception (14).

2. Fermeture à bouchon de bonde selon la revendication 1,
**caractérisée en ce que**
le boulon fileté (13, 52, 65, 75) a un élément de ressort (55, 68) pour s'appuyer sur une surface de paroi du trou de réception (14) ou le trou de réception (14) a un élément de ressort pour s'appuyer sur une surface de paroi du boulon fileté (13, 52, 65, 75) de telle manière qu'une force de précharge (F) est effective entre le boulon fileté (13, 52, 65, 75) et le trou de réception (14).

3. Fermeture à bouchon de bonde selon la revendication 2,
**caractérisée en ce que**
l'élément de ressort (55, 68) est formé sur une surface de paroi du boulon fileté (13, 52, 65, 75) ou du trou de réception (14), ladite surface de paroi étant formée par une surface de filetage (56).

4. Fermeture à bouchon de bonde selon la revendication 3,
**caractérisée en ce que**
l'élément de ressort (55) a au moins une languette de ressort (57) qui est formée sur le boulon fileté (13, 52) et qui a une tête de languette (59) dépassant radialement un noyau de filetage (58) du boulon fileté (13, 52).

5. Fermeture à bouchon de bonde selon la revendication 4,
**caractérisée en ce que**
l'élément de ressort (55) a une pluralité de languettes de ressort (57) dont les têtes de languette (59) sont disposées dans un plan horizontal commun du boulon fileté (13, 52).

6. Fermeture à bouchon de bonde selon la revendication 5,
**caractérisée en ce que**
les languettes de ressort (57) sont disposées à une extrémité inférieure du boulon fileté (13, 52).

7. Fermeture à bouchon de bonde selon la revendication 3,
**caractérisée en ce que**
l'élément de ressort (68) est formée sur une partie de filet (70) du boulon fileté (65) ou du filetage intérieur (39) du trou de réception (14).

8. Fermeture à bouchon de bonde selon la revendication 7,
**caractérisée en ce que**
l'élément de ressort (68) a au moins une languette de ressort (69) formée sur une partie de filet (70), ladite languette de ressort (69) ayant une saillie de filet (71) radiale formée sur la partie de filet.

9. Fermeture à bouchon de bonde selon l'une quelconque des revendications précédentes,
**caractérisée en ce que**
la disque de couvercle (29) a un dispositif d'enclenchement (33) qui interagit de telle manière avec un contre-dispositif d'enclenchement disposé dans le creux de bouchon (16) que le déplacement relatif axial de la disque de couvercle (29) dans le creux de bouchon (16) est limité par le fond de creux (15) d'un côté et par le contre-dispositif d'enclenchement de l'autre côté.

10. Fermeture à bouchon de bonde selon la revendication 9,
**caractérisée en ce que**
le contre-dispositif d'enclenchement a des contre-éléments d'enclenchement (34) qui sont disposés sur une paroi intérieure (19) du creux de bouchon (16) et qui sont configurés pour s'enclencher avec une saillie d'enclenchement annulaire qui est formée sur un corps d'engrènement d'un capuchon de scellement qui est inséré dans le creux de bouchon (16).

11. Fermeture à bouchon de bonde selon l'une quelconque des revendications précédentes,
**caractérisée en ce que**
le bouchon de bonde (11) a un mécanisme d'échange de gaz (38) formé sur le fond de creux (15) pour aérer et désaérer un intérieur du récipient à bondon, le mécanisme d'échange de gaz (38) ayant une ouverture d'échange de gaz qui est disposée dans le fond de creux (15), le boulon fileté (13, 65), qui est disposé dans le trou de réception (14), ayant un trou de passage qui sert de trou d'échange de gaz (43) pour former l'ouverture d'échange de gaz.
